# EUROPEAN PATENT APPLICATION

(11) **EP 4 553 257 A1**
(43) Date of publication of application: **14.05.2025**
(21) Application number: 24801062.1
(22) Date of filing: 02.08.2024
(51) Int. Cl.: E04H 12/00, H02G 7/00, H02G 7/05, H02G 7/20, H01B 17/42

(54) **POWER TRANSMISSION TOWER**

(30) Priority: 25.09.2023 CN 202322607473 U; 25.07.2024 CN 202421784133 U
(71) Applicant: Shanghai Shemar Power Engineering Co., Ltd., Shanghai 200050 (CN)
(72) Inventor: WANG, Xinlong, Shanghai 200050 (CN); LI, Yanlin, Shanghai 200050 (CN); WANG, Chen, Shanghai 200050 (CN); WANG, Ying, Shanghai 200050 (CN)
(74) Representative: Arnold & Siedsma
(86) International application number: PCT/CN2024/109411
(87) International publication number: WO 2025/066542

(57) **Abstract**

The present application provides a transmission tower, including: a tower body; and a composite crossarm arranged on the tower body. The composite crossarm includes: a post insulator having a low-voltage end connected to the tower body, and a high-voltage end; a suspension insulator having a low-voltage end connected to the tower body, and a high-voltage end; and a node fitting comprising two clamping plates arranged parallel to each other. The high-voltage end of the post insulator and the high-voltage end of the suspension insulator are connected together by the node fitting, and the post insulator and the suspension insulator are inserted between the two clamping plates through connecting fittings, so that the post insulator and the suspension insulator are connected to the node fitting, and each of the two clamping plates is provided with a wire attaching hole for attaching a conductor. With the above design, the node fitting can have more compact design and meanwhile have a good bending moment resisting capacity.

## Description

### TECHNICAL FIELD

The present application relates to the field of power transmission technologies, and in particular, to a transmission tower.

### BACKGROUND

In a transmission tower, a node fitting is generally used for connecting insulators and attaching a conductor. However, on the one hand, the existing node fitting has a complex structure, occupies a large space, and thus is not conducive to construction and maintenance, and on the other hand, in order to guarantee safety under extreme working conditions, overlarge design redundancy is set for the node fitting, thus reducing an economy.

### SUMMARY

In view of this, the present application provides a transmission tower, in which a node fitting can have a simple structure, be easy to manufacture, have clear force transmission, be matched with any conductor bundle number and any wire attaching point number, and meanwhile have a good bending moment resisting capacity.

In order to solve the above problems, the present application provides a transmission tower, including: a tower body; and a composite crossarm arranged on the tower body. The composite crossarm includes: a post insulator having a low-voltage end connected to the tower body, and a high-voltage end; a suspension insulator having a low-voltage end connected to the tower body, and a high-voltage end; and a node fitting comprising two clamping plates arranged parallel to each other. The high-voltage end of the post insulator and the high-voltage end of the suspension insulator are connected together by the node fitting, and the post insulator and the suspension insulator are inserted between the two clamping plates through connecting fittings, so that the post insulator and the suspension insulator are connected to the node fitting, and each of the two clamping plates is provided with a wire attaching hole for attaching a conductor.

The high-voltage end of the post insulator is provided with a first connecting fitting, and the first connecting fitting includes: a flange cylinder axially formed as a hollow structure; a sealing plate configured to seal an end of the flange cylinder away from the post insulator; and an insertion plate arranged on a side of the sealing plate away from the flange cylinder, and being perpendicular to the sealing plate.

A first connecting hole is formed in the insertion plate, each of the two clamping plates is provided with a second connecting hole, the insertion plate is inserted between the two clamping plates, and a fastener is inserted into the first connecting hole and the second connecting hole that are aligned with each other, so as to fixedly connect the first connecting fitting to the node fitting.

The high-voltage end of the suspension insulator is provided with a second connecting fitting, the second connecting fitting is a plate member, the second connecting fitting is provided with a third connecting hole, and each of the two clamping plates is provided with a fourth connecting hole, the second connecting fitting is inserted between the two clamping plates, and a fastener is inserted into the third connecting hole and fourth connecting hole aligned with each other, so as to fixedly connect the second connecting fitting to the node fitting.

A high-voltage end of the composite crossarm is provided with a high-voltage end arcing assembly, a low-voltage end of the composite crossarm is provided with a low-voltage end arcing assembly, and the high-voltage end arcing assembly and the low-voltage end arcing assembly form a shortest electric clearance on the composite crossarm.

The high-voltage end arcing assembly includes a first arcing ball and a first arcing bar, the first arcing bar has an end connected to the high-voltage end of the composite crossarm and another end connected to the first arcing ball, and the first arcing ball is used as an arcing end of the high-voltage end arcing assembly.

The low-voltage end arcing assembly includes a first arcing ring and a second arcing bar, the first arcing ring is provided with a first notch, the second arcing bar has an end connected to the first arcing ring at the first notch and another end bending in a direction away from the first arcing ring, and an end of the second arcing bar away from the first arcing ring is used as an arcing end of the low-voltage end arcing assembly.

The high-voltage end arcing assembly includes a second arcing ring, a second arcing ball, and a connecting bracket, the second arcing ring and the second arcing ball are connected to the composite crossarm through the connecting bracket, the second arcing ring is provided with a second notch, and the second arcing ball is located at the second notch to serve as the arcing end of the high-voltage end arcing assembly.

The transmission tower further includes: a first hinged member configured to connect the low-voltage end of the post insulator to the tower body, so that the post insulator is rotatable relative to the tower body; and a second hinged member configured to connect the low-voltage end of the suspension insulator to the tower body, so that the suspension insulator is rotatable relative to the tower body.

The tower body includes: a tower main body; a first support frame and a second support frame. The first support frame and the second support frame are convexly arranged on a same side wall of the tower main body, the first support frame is connected to the low-voltage end of the post insulator, and the second support frame is connected to the low-voltage end of the suspension insulator.

Each of two opposite outer plate surfaces of the two clamping plates is connected to a fixing plate, and the fixing plate is provided with a construction hole for construction and maintenance of the composite crossarm.

Each of two opposite outer plate surfaces of the two clamping plates is connected to a fixing plate, the fixing plate is provided with an auxiliary connector, and the auxiliary connector is provided with a construction hole for construction and maintenance of the composite crossarm.

The auxiliary connector is a T-shaped plate, and the auxiliary connector is detachably connected to the fixing plate.

For each of the two clamping plates and the fixing plate connected to the clamping plate, a reinforcing rib is arranged between the outer plate surface of the clamping plate and a first plate surface of the fixing plate, and another reinforcing rib is arranged between the outer plate surface of the clamping plate and a second plate surface of the fixing plate opposite to the first plate surface.

Beneficial effects: in the present application, the node fitting is formed by the two clamping plates, which not only meets use requirements, but also can make design of the node fitting more compact and avoid design redundancy. Meanwhile, compared with a node fitting formed by a single flat plate with a same total thickness, the node fitting in the present application has a larger section modulus around a neutral axis and a higher bending moment resisting capacity, thus prolonging service life of the node fitting.

Further, due to the arrangement of the first hinged member and the second hinged member, the composite crossarm can rotate relative to the tower body, so that excessive unbalanced tension can be released by rotation, and the tower body is protected from damage.

Furthermore, the arrangement of the fixing plate and the auxiliary connector can facilitate operation, maintenance, and construction of the composite crossarm, and also ensure that the structure of the node fitting is free of interference and remains stable.

### BRIEF DESCRIPTION OF THE DRAWINGS

Various other advantages and merits will become apparent to those skilled in the art by reading through the following detailed description of preferred embodiments. Figures are only intended to illustrate preferred embodiments and not construed as limiting the present application. In all figures, like reference numerals denote like parts. In the drawings:
FIG. 1 is a schematic structural diagram of a transmission tower according to an embodiment of the present application;
FIG. 2 is a schematic structural diagram of a composite crossarm in FIG. 1;
FIG. 3 is a schematic structural diagram of a node fitting in FIG. 1;
FIG. 4 is a schematic structural diagram of a first connecting fitting in FIG. 2;
FIG. 5 is a schematic structural diagram of a transmission tower according to another embodiment of the present application; and
FIG. 6 is a schematic enlarged diagram of portion A in FIG. 5.

### DETAILED DESCRIPTION

The technical solutions in the embodiments of the present application are clearly and completely described with reference to the accompanying drawings in the embodiments of the present application, and apparently, the described embodiments are not all but only a part of the embodiments of the present application. All other embodiments obtained by a person of ordinary skill in the art based on the embodiments of the present application without creative efforts shall fall within the protection scope of the present application.

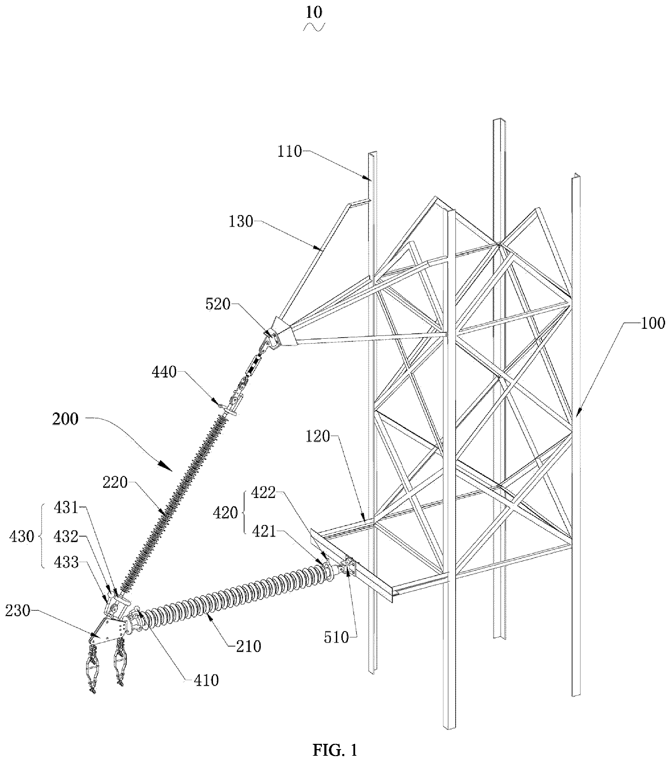

Referring to FIG. 1, the present application provides a transmission tower 10, including a tower body 100 and a composite crossarm 200 arranged on the tower body 100, and the composite crossarm 200 includes a post insulator 210, a suspension insulator 220, and a node fitting 230. The post insulator 210 has a low-voltage end connected to the tower body 100 and a high-voltage end. The suspension insulator 220 has a low-voltage end connected to the tower body 100 and a high-voltage end. The high-voltage ends of the post insulator 210 and the suspension insulator 220 are connected to the node fitting 230. The node fitting 230 connects the post insulator 210 and the suspension insulator 220 together to form an end of the composite crossarm 200 for attaching a conductor.

The tower body 100 can be a transmission tower of a common structure, such as a lattice tower, a pole or a composite pole tower. The composite crossarm 200 can be arranged on one side of the tower body 100, or the composite crossarms 200 can be arranged on plural sides of the tower body 100. One composite crossarm 200 can be arranged on one side of the tower body 100, or plural composite crossarms 200 can be arranged at intervals in a vertical direction.

The post insulator 210 includes an insulator body, a shed covering an outer circumference of the insulator body, and end fittings arranged at both ends of the insulator body, the insulator body is a composite insulator body made by impregnating glass fibers with epoxy resin, and the shed can be made of high temperature vulcanized silicone rubber, liquid silicone rubber, room temperature vulcanized silicone rubber, or the like, which is also not limited herein. A structure and a material of the suspension insulator 220 are similar to those of the post insulator 210 and not repeated.

In an application scenario, it is provided with one post insulator 210 and one suspension insulator 220 (as shown in FIG. 1). The low-voltage end of the suspension insulator 220 and the low-voltage end of the post insulator 210 are located on a same vertical line, and the low-voltage end of the suspension insulator 220 is higher than the low-voltage end of the post insulator 210. In another application scenario, it is provided with two post insulators and two suspension insulators. In still another application scenario, it is provided with two post insulators and one suspension insulator. In summary, the numbers of the post insulators 210 and the suspension insulators 220 are not limited in the present application.

Referring to FIG. 1 to FIG. 3, the node fitting 230 includes two clamping plates 231 arranged parallel to each other. The clamping plate 231 is a plate member, such as a rectangular plate member, a circular plate member or other special-shaped plate member. In the present application, the clamping plate 231 is a special-shaped plate member, specifically a polygonal plate member, which facilitates the connection to other members, and minimizes a size of a plate surface of the clamping plate 231 to reduce weight of the clamping plate 231, thereby reducing the weight of the node fitting 230 and a cost. In the present application, the two parallel clamping plates 231 form the node fitting 230, a certain gap is reserved between the two clamping plates 231, and compared with a node fitting formed by a single flat plate with a same total thickness, the node fitting 230 according to the present application has a larger section modulus around a neutral axis of the node fitting 230 and a higher bending moment resisting capacity, thus prolonging service life of the node fitting 230.

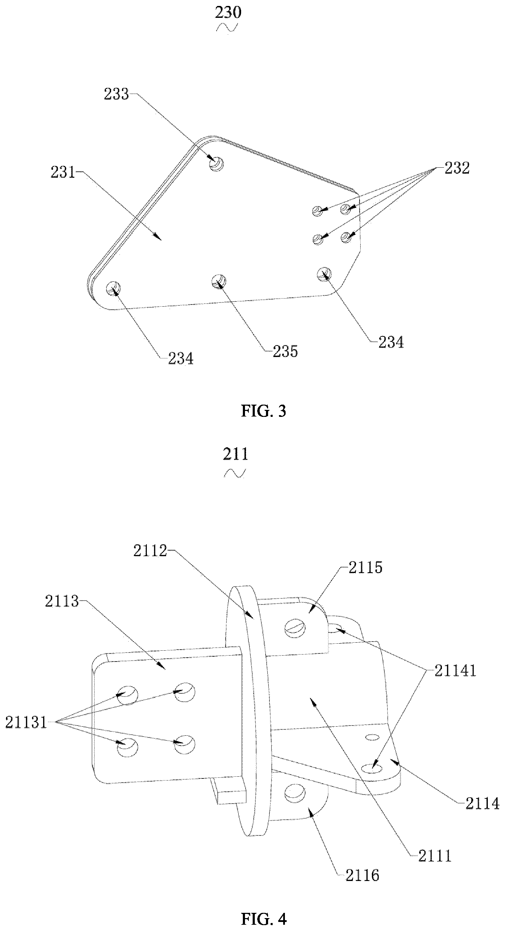

The post insulator 210 and the suspension insulator 220 are inserted between the two clamping plates 231 through connecting fittings, so that the post insulator 210 and the suspension insulator 220 are connected to the node fitting 230. Referring to FIG. 4, the high-voltage end of the post insulator 210 is provided with a first connecting fitting 211 including a first flange cylinder 2111, a first sealing plate 2112, and a first insertion plate 2113. The first flange cylinder 2111 is axially formed as a hollow structure, an end of the insulator body of the post insulator 210 is sleeved by the first flange cylinder 2111, the first sealing plate 2112 seals an end of the first flange cylinder 2111 away from the post insulator 210 to prevent water vapor, or the like, from entering the insulator. The first insertion plate 2113 is arranged on a side of the first sealing plate 2112 away from the first flange cylinder 2111, and the first insertion plate 2113 is arranged perpendicular to the first sealing plate 2112. A plurality of first connecting holes 21131 are formed in the first insertion plate 2113, a plurality of second connecting holes 232 are formed in the two clamping plates 231, the number and positions of the first connecting holes 2113 are in one-to-one correspondence to the number and positions of the second connecting holes 232. When the first insertion plate 2113 is inserted between the two clamping plates 231, the first connecting holes 21131 are aligned with the second connection holes 232 respectively, and a fastener is inserted into the first connecting holes 21131 and second connecting holes 232 aligned with each other, so as to fixedly connect the first connecting fitting 211 to the node fitting 230, and the post insulator 210 is fixedly connected to the node fitting 230.

In other embodiments, when the number of the post insulators is at least two, the plural post insulators may be first connected to the first connecting fittings of other structures, and then fixedly connected to the node fitting through the first connecting fittings, and details are not repeated.

The high-voltage end of the suspension insulator 220 is provided with a second connecting fitting 221, the second connecting fitting 221 is a plate member, the second connecting fitting 221 is provided with a third connecting hole 2211, and each of the two clamping plates 231 is provided with a fourth connecting hole 233. The second connecting fitting 221 is inserted between the two clamping plates 231, and a fastener is inserted into the third connecting hole 2211 and the fourth connecting holes 233 aligned with each other, so as to fixedly connect the second connecting fitting 221 to the node fitting 230, and the suspension insulator 220 is fixedly connected to the node fitting 230.

In other embodiments, when the number of the suspension insulators is at least two, a connector may be provided, the connector has an end fixedly connected to the node fitting 230 and another end fixedly connected to the plurality of suspension insulators, and details are not repeated.

The second connecting hole 232 and the fourth connecting hole 233 are located at different ends of the clamping plate 231 to form a certain angle between the post insulator 210 and the suspension insulator 220, so that the post insulator, the suspension insulator 220, and the tower body 100 form a stable triangular structure to guarantee structural stability of the composite crossarm 200. Meanwhile, the node fitting 230 is stressed evenly, a concentrated force at a same position is avoided, and the service life of the node fitting 230 is prolonged.

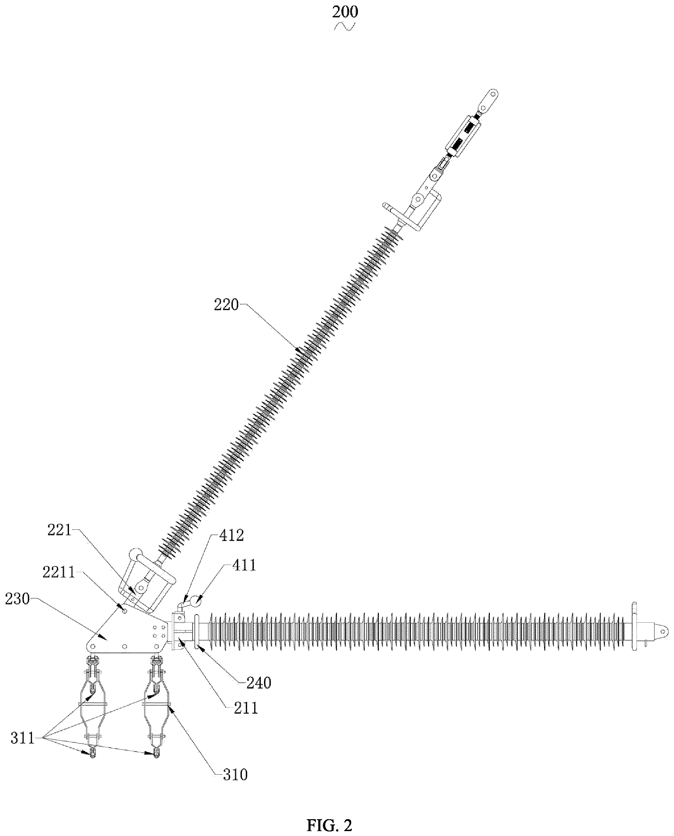

Referring to FIG. 2 and FIG. 3, a wire attaching hole 234 is formed in a bottom of the clamping plate 231, a wire attaching fitting string 310 is directly attached in the wire attaching hole 234, and the wire attaching fitting string 310 is correspondingly provided with two clamps 311 for attaching two sub-conductors. The bottom of the clamping plate 231 is also provided with a first construction hole 235, and the first construction hole 235 is spaced apart from the wire attaching hole 234 and configured for construction or maintenance. In an embodiment, single-phase quad-bundle is attached by the composite crossarm 200 of the transmission tower 10. In the present embodiment, two wire attaching holes 234 are spaced at the bottom of the clamping plate 231 to facilitate attaching of, for example, fitting strings with a double-attaching-point, double-string mode, and two sub-conductors are attached in each wire attaching hole 234. Two wire attaching holes 234 and one first construction hole 235 are arranged at intervals in a direction parallel to the bottom of the clamping plate 231, which can guarantee a force uniformity of the node fitting 230. In use, according to requirements, the first construction hole 235 can be configured to attach the wire attaching fitting string 310, and the wire attaching hole 234 is configured for construction or maintenance; that is, functions of the wire attaching hole 234 and the first construction hole 235 can be exchanged. Meanwhile, in other embodiments, numbers of the wire attaching hole and the first construction hole can also be set to other numbers, as long as a wire attaching demand is met.

The node fitting 230 in the present application has a simple structure, is convenient to manufacture and has a clear force transmission path and a simple force form.

Referring to FIG. 1 and FIG. 4, in an embodiment, two first connecting plates 2114 are arranged on the first connecting fitting 211, the two first connecting plates 2114 are distributed on two sides of the first flange cylinder 2111 along an extension direction of the conductor, a temporary guy wire hole 21141 is formed in the first connecting plate 2114, and a guy wire can be arranged during mounting and wiring of the composite crossarm 200. In the present embodiment, two guy wires can be arranged and located on two sides of the post insulator 210 respectively, and each guy wire has an end connected to the first connecting fitting 211 through the temporary guy wire hole 21141 and another end connected to the tower body 100, so as to guarantee stability of the composite crossarm 200 in construction and mounting processes.

In an application scenario, the first connecting fitting 211 is further provided with a second connecting plate 2115 and a third connecting plate 2116, and the second connecting plate 2115 and the third connecting plate 2116 are distributed on the two sides of the first flange cylinder 2111 along a direction perpendicular to the extension direction of the conductor, that is, the second connecting plate 2115 and the third connecting plate 2116 are distributed on a top and a bottom of the first flange cylinder 2111, as shown in FIG. 4. In an application scenario, the two first connecting plates 2114, the second connecting plate 2115, and the third connecting plate 2116 are uniformly and circumferentially arranged on the first flange cylinder 2111. The second connecting plate 2115 is provided with a mounting hole for mounting an arcing device, and the third connecting plate 2116 is provided with a second construction hole for construction or maintenance.

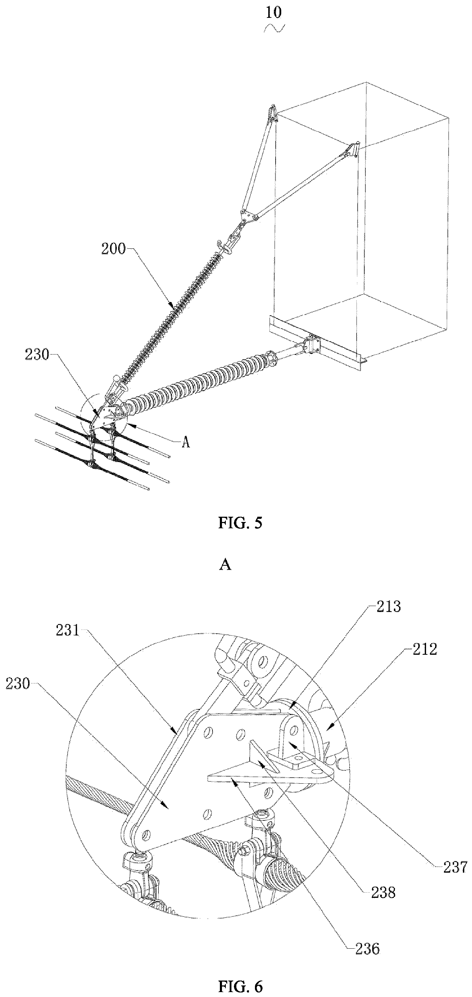

Referring to FIG. 5 and FIG. 6, in another embodiment, each of two opposite outer plate surfaces of the two clamping plates 231 of the node fitting 230 is connected to a fixing plate 236, and the fixing plate 236 is provided with a third construction hole for construction or maintenance of the composite crossarm 200.

In an application scenario, an auxiliary connector 237 is mounted on the fixing plate 236, the fixing plate 236 is connected to the auxiliary connector 237 by forming corresponding through holes in the fixing plate 236 and the auxiliary connector 237 and inserting a fastener in the through holes, and a third construction hole is formed in the auxiliary connector 237, so that other auxiliary devices for construction or maintenance of the composite crossarm 200 can be fixedly connected to the node fittings 230. The arrangement of the auxiliary connector 237 can avoid interference with the composite crossarm 200 when other auxiliary devices are directly mounted to the fixing plate 236, so that mounting can be conveniently and rapidly performed.

In the present embodiment, the auxiliary connector 237 is a T-shaped plate, and the auxiliary connector 237 is detachably connected to the fixing plate 236 by bolts and nuts, so that the auxiliary connector 237 can be detached and reused. In other embodiments, the third construction hole can be formed in the fixing plate or other components of the node fitting for directly connecting other auxiliary devices, which is not limited herein.

With continued reference to FIG. 6, reinforcing ribs 238 are arranged between the outer plate surface of the clamping plate 231 and two opposite plate surfaces of the fixing plate 236. That is, the two reinforcing ribs 238 are arranged between the plate surfaces on two sides at a fixed connection position of the clamping plate 231 and the fixing plate 236. The arrangement of the reinforcing rib 238 can further increase connection strength between the fixing plate 236 and the clamping plate 231, so that when other auxiliary devices are fixed on the node fitting 230, the phenomenon that other auxiliary devices fall off due to breakage of the fixing plate 236 can be avoided, and potential safety hazards are further eliminated.

The clamping plate 231, the fixing plate 236, and the reinforcing ribs 238 can be separately formed and then connected by welding, or can be directly formed integrally, which is not limited herein.

With continued reference to FIG. 6, in the present embodiment, the high-voltage end of the post insulator 210 is sleeved by an end fitting 212, and the end fitting 212 is detachably connected to a third connecting fitting 213, so that the post insulator 210 can be conveniently detached and replaced, and operation and maintenance of the composite crossarm 200 are realized. The end fitting 212 includes a second flange cylinder and a second sealing plate, the second flange cylinder is axially formed as a hollow structure, an end of the insulator body of the post insulator 210 is sleeved by the second flange cylinder, and the second sealing plate seals an end of the second flange cylinder away from the post insulator 210 to prevent water vapor, or the like, from entering the insulator body. The third connecting fitting 213 includes a third sealing plate and a second insertion plate, and the second insertion plate is arranged perpendicular to the third sealing plate. A fastener is inserted into the second sealing plate and the third sealing plate that match each other correspondingly, so as to detachably and fixedly connect the end fitting 212 to the third connecting fitting 213. Meanwhile, the second insertion plate is fixedly inserted between the two clamping plates 231, and the third connecting fitting 213 is fixedly connected to the node fitting 230, so that the post insulator 210 is fixedly connected to the node fitting 230.

With continued reference to FIG. 1 and FIG. 2, the arcing device is mounted on the composite crossarm 200, and specifically includes a high-voltage end arcing assembly and a low-voltage end arcing assembly, the high-voltage end arcing assembly is arranged at the high-voltage end of the composite crossarm, the low-voltage end arcing assembly is arranged at the low-voltage end of the composite crossarm, and the high-voltage end arcing assembly and the low-voltage end arcing assembly form a shortest electric clearance on the composite crossarm 200, so that in an overvoltage case, such as when struck by lightning, the discharge clearance between the high-voltage end arcing assembly and the low-voltage end arcing assembly is first broken down, which can avoid burning of any insulator on the composite crossarm 200 due to a high current flowing from the high-voltage end to the low-voltage end, thereby protecting the composite crossarm 200 and reducing potential safety hazards.

The high-voltage end of the post insulator 210 is provided with a first high-voltage end arcing assembly 410, the first high-voltage end arcing assembly 410 includes a first arcing ball 411 and a first arcing bar 412, an end of the first arcing bar 412 is connected to the high-voltage end of the post insulator 210, another end of the first arcing bar 412 is connected to the first arcing ball 411, and the first arcing ball 411 serves as an arcing end of the first high-voltage end arcing assembly 410. In consideration of a high electric field intensity at the high-voltage end of the post insulator 210, the first arcing ball 411 is used as the arcing end of the first high-voltage end arcing assembly 410, which can ensure that while arcing initiation is realized, a ball structure can decrease point discharge phenomenon to guarantee uniform distribution of an electric field. An end of the first arcing bar 412 not connected to the first arcing ball 411 is fixedly connected to the second connecting plate 2115, so that the first high-voltage end arcing assembly 410 is fixedly connected to the post insulator 210.

The low-voltage end of the post insulator 210 is provided with a first low-voltage end arcing assembly 420, the first low-voltage end arcing assembly 420 includes a first arcing ring 421 and a second arcing bar 422, the first arcing ring 421 is provided with a first notch, the second arcing bar 422 has an end connected to the first arcing ring 421 at the first notch and another end bending in a direction away from the first arcing ring 421. The end of the second arcing bar 422 bending in a direction away from the first arcing ring 421 is used as an arcing end of the first low-voltage end arcing assembly 420. In consideration of a low electric field intensity at the low-voltage end of the post insulator 210, in order to reduce an apparatus cost, the arcing end of the first low-voltage end arcing assembly 420 is only required to have arcing initiation function, and therefore, a free end of the second arcing bar 422 not connected to the post insulator 210 is used as the arcing end of the first low-voltage end arcing assembly 420. The first low-voltage end arcing assembly 420 is fixedly connected to the low-voltage end of the post insulator 210 by a connector (not shown).

The high-voltage end of the suspension insulator 220 is provided with a second high-voltage end arcing assembly 430, the second high-voltage end arcing assembly 430 includes a second arcing ring 431, a second arcing ball 432, and a connecting bracket 433, the second arcing ring 431 is connected to the second connecting fitting 221 through the connecting bracket 433, so that the second high-voltage end arcing assembly 430 is connected to the high-voltage end of the suspension insulator 220. Meanwhile, the second arcing ball 432 is also connected to the suspension insulator 220 through the connecting bracket 433, the second arcing ring 431 is provided with a second notch, and the second arcing ball 432 is located at the second notch to serve as an arcing end of the second high-voltage end arcing assembly 430. In consideration of a high electric field intensity at the high-voltage end of the suspension insulator 220, the second arcing ball 432 is used as the arcing end of the second high-voltage end arcing assembly 430, which can ensure that while arcing initiation is realized, a ball structure can decrease point discharge phenomenon to guarantee uniform distribution of an electric field.

The low-voltage end of the suspension insulator 220 is provided with a second low-voltage end arcing assembly 440, a structure of which is similar to that of the first low-voltage end arcing assembly 420 and not repeated.

With continued reference to FIG. 2, in order to further improve the safety performance and guarantee the service life of the composite crossarm 200, the high-voltage end of the post insulator 210 is further sleeved by a grading ring 240.

With continued reference to FIG. 1, the transmission tower 10 further includes a first hinged member 510 and a second hinged member 520, and both the first hinged member 510 and the second hinged member 520 are rotatable connectors. The first hinged member 510 is configured to connect the low-voltage end of the post insulator 210 to the tower body 100, so that the post insulator 210 can rotate relative to the tower body 100; the second hinged member 520 is configured to connect the low-voltage end of the suspension insulator 200 to the tower body 100, so that the suspension insulator 220 can rotate relative to the tower body 100.

In the present application, both numbers of the post insulators 210 and the suspension insulators 220 are one, and the post insulator 210, the suspension insulator 220, and the tower body 100 form a stable triangular structure. In actual operation, the composite crossarm 200 may be affected by a wind load and other factors, resulting in an unbalanced tension of the conductor, and in this case, the composite crossarm 200 may rotate to a side of the conductor with greater tension, so that a span of the conductors on two sides (a horizontal distance between wire attaching points of two adjacent transmission towers) and other parameters change. That is, a wire attaching end of the composite crossarm 200 is displaced. When the composite crossarm 200 deflects to a certain position, the tension on the conductors on two sides reaches a new balance, so that the unbalanced tension is released, and safety of a power transmission line is improved.

Since the design has the effect of releasing the unbalanced tension load to a certain extent, it can be considered to reduce a design specification in the design, and compared with a fixed connection, a design for small failure load condition can be adopted in the present application, so as to reduce a manufacturing cost.

Meanwhile, in the prior art, the post insulator 210 is usually connected to the tower body 100 in the form of a lap plate (including an insertion plate, or the like), the connection is actually between a fixed connection and a hinged connection, but in corresponding pressing stability calculation, for security reasons, the connection is often assumed as a hinged connection, and a boundary condition for the hinged connection is used, resulting in design redundancy. In the design of the present application, the connection between the post insulator 210 and the tower body 100, and the connection between the suspension insulator 220 and the tower body 100 are hinged connections, which is consistent with the boundary condition assumed in a stability calculation formula and can avoid the design redundancy.

In other embodiments, the composite crossarm and the tower body may also be connected by a fixed connector, and in this case, neither the post insulator nor the suspension insulator can rotate relative to the tower body.

With continued reference to FIG. 1, the tower body 100 includes a tower main body 110, a first support frame 120, and a second support frame 130. The first support frame 120 and the second support frame 130 are convexly arranged on a same side wall of the tower main body 110, the first support frame 120 is connected to the low-voltage end of the post insulator 210, and the second support frame 130 is connected to the low-voltage end of the suspension insulator 220.

The first support frame 120 can be designed adaptively according to a relative position and angle between the post insulator 210 and the tower body 100, and the second support frame 130 can be designed adaptively according to a relative position and angle between the suspension insulator 220 and the tower body 100.

Due to the arrangement of the first support frame 120 and the second support frame 130, on the one hand, the composite crossarm 200 and the tower body 100 can be conveniently and efficiently maintained; on the other hand, when plural composite crossarms 200 are arranged on the tower body 100, since a distance between the composite crossarm 200 and the tower body 100 can be adjusted by the first support frame 120 and the second support frame 130, sizes of the plural composite crossarms 200 can be consistent, thereby improving a production efficiency.

In some other embodiments, the first support frame and the second support frame can be omitted, and the post insulator and the suspension insulator can be directly mounted on the tower body. Alternatively, only the first support frame is mounted, the second support frame is omitted, and in this case, the post insulator is connected to the first support frame, and the suspension insulator is mounted directly on the tower body, which is not limited herein.

Finally, it should be noted that the above embodiments are only used to illustrate the technical solutions of the present application, not to limit the present application; although the present application is described in detail with reference to the above embodiments, those having ordinary skill in the art should understand that they still can modify technical solutions recited in the aforesaid embodiments or equivalently replace partial or all technical features therein; these modifications or substitutions do not make essence of corresponding technical solutions depart from the scope of technical solutions of embodiments of the present application, and all of them should be included in the scope of the claims and description of the present application. Particularly, as long as structural conflicts do not exist, all technical features mentioned in all the embodiments may be combined together in any mode. The present application is not limited to the specific embodiments disclosed in the description, but includes all technical solutions falling into the scope of the claims.

## Claims

1. A transmission tower, comprising:
a tower body; and
a composite crossarm arranged on the tower body and comprising:
a post insulator having a low-voltage end connected to the tower body, and a high-voltage end;
a suspension insulator having a low-voltage end connected to the tower body, and a high-voltage end; and
a node fitting comprising two clamping plates arranged parallel to each other,
wherein the high-voltage end of the post insulator and the high-voltage end of the suspension insulator are connected together by the node fitting, and the post insulator and the suspension insulator are inserted between the two clamping plates through connecting fittings, so that the post insulator and the suspension insulator are connected to the node fitting, and each of the two clamping plates is provided with a wire attaching hole for attaching a conductor.

2. The transmission tower according to claim 1,
wherein the high-voltage end of the post insulator is provided with a first connecting fitting comprising:
a flange cylinder axially formed as a hollow structure;
a sealing plate configured to seal an end of the flange cylinder away from the post insulator; and
an insertion plate arranged on a side of the sealing plate away from the flange cylinder, and
being perpendicular to the sealing plate.

3. The transmission tower according to claim 2,
wherein a first connecting hole is formed in the insertion plate, each of the two clamping plates is provided with a second connecting hole, the insertion plate is inserted between the two clamping plates, and a fastener is inserted into the first connecting hole and the second connecting hole that are aligned with each other, so as to fixedly connect the first connecting fitting to the node fitting.

4. The transmission tower according to claim 1,
wherein the high-voltage end of the suspension insulator is provided with a second connecting fitting, the second connecting fitting is a plate member, the second connecting fitting is provided with a third connecting hole, and each of the two clamping plates is provided with a fourth connecting hole, the second connecting fitting is inserted between the two clamping plates, and a fastener is inserted into the third connecting hole and fourth connecting hole aligned with each other, so as to fixedly connect the second connecting fitting to the node fitting.

5. The transmission tower according to claim 1,
wherein a high-voltage end of the composite crossarm is provided with a high-voltage end arcing assembly, a low-voltage end of the composite crossarm is provided with a low-voltage end arcing assembly, and the high-voltage end arcing assembly and the low-voltage end arcing assembly form a shortest electric clearance on the composite crossarm.

6. The transmission tower according to claim 5,
wherein the high-voltage end arcing assembly comprises a first arcing ball and a first arcing bar, the first arcing bar has an end connected to the high-voltage end of the composite crossarm and another end connected to the first arcing ball, and the first arcing ball is used as an arcing end of the high-voltage end arcing assembly.

7. The transmission tower according to claim 5,
wherein the low-voltage end arcing assembly comprises a first arcing ring and a second arcing bar, the first arcing ring is provided with a first notch, the second arcing bar has an end connected to the first arcing ring at the first notch and another end bending in a direction away from the first arcing ring, and an end of the second arcing bar away from the first arcing ring is used as an arcing end of the low-voltage end arcing assembly.

8. The transmission tower according to claim 5,
wherein the high-voltage end arcing assembly comprises a second arcing ring, a second arcing ball, and a connecting bracket, the second arcing ring and the second arcing ball are connected to the composite crossarm through the connecting bracket, the second arcing ring is provided with a second notch, and the second arcing ball is located at the second notch to serve as the arcing end of the high-voltage end arcing assembly.

9. The transmission tower according to claim 1,
wherein the transmission tower further comprises:
a first hinged member configured to connect the low-voltage end of the post insulator to the tower body, so that the post insulator is rotatable relative to the tower body; and
a second hinged member configured to connect the low-voltage end of the suspension insulator to the tower body, so that the suspension insulator is rotatable relative to the tower body.

10. The transmission tower according to claim 1,
wherein the tower body comprises:
a tower main body;
a first support frame; and
a second support frame,
wherein the first support frame and the second support frame are convexly arranged on a same side wall of the tower main body, the first support frame is connected to the low-voltage end of the post insulator, and the second support frame is connected to the low-voltage end of the suspension insulator.

11. The transmission tower according to claim 1,
wherein each of two opposite outer plate surfaces of the two clamping plates is connected to a fixing plate, and the fixing plate is provided with a construction hole for construction and maintenance of the composite crossarm.

12. The transmission tower according to claim 1,
wherein each of two opposite outer plate surfaces of the two clamping plates is connected to a fixing plate, the fixing plate is provided with an auxiliary connector, and the auxiliary connector is provided with a construction hole for construction and maintenance of the composite crossarm.

13. The transmission tower according to claim 12,
wherein the auxiliary connector is a T-shaped plate, and the auxiliary connector is detachably connected to the fixing plate.

14. The transmission tower according to claim 13,
wherein reinforcing ribs are arranged between the outer plate surface of the clamping plate and two opposite plate surfaces of the fixing plate respectively.
